# EUROPÄISCHE PATENTSCHRIFT

(11) **EP 2 794 156 B1**
(45) Veröffentlichungstag und Bekanntmachung des Hinweises auf die Patenterteilung: **09.03.2016**
(21) Anmeldenummer: 12809775.5
(22) Anmeldetag: 18.12.2012
(51) Int. Cl.: B23B 5/18

(54) **MASCHINE UND VERFAHREN ZUM DREHEN ZUMINDEST VON HUBLAGERZAPFEN UMGEBENDEN PLANSCHULTERN EINER KURBELWELLE**
MACHINE AND METHOD FOR TURNING AT LEAST FLAT SHOULDERS OF A CRANKSHAFT THAT SURROUND BEARING PINS
MACHINE ET PROCÉDÉ PERMETTANT DE FAIRE TOURNER AU MOINS DES ÉPAULEMENTS PLANS, ENTOURANT DES MANETONS, D'UN VILEBREQUIN

(30) Priorität: 22.12.2011 DE 102011089654
(43) Veröffentlichungstag der Anmeldung: 29.10.2014
(73) Patentinhaber: Erwin Junker Maschinenfabrik GmbH, 77787 Nordrach (DE)
(72) Erfinder: JUNKER, Erwin, 77815 Bühl (DE)
(74) Vertreter: Leske, Thomas
(86) Internationale Anmeldenummer: PCT/EP2012/075974
(87) Internationale Veröffentlichungsnummer: WO 2013/092599

(56) Entgegenhaltungen:
- DE-A1- 19 609 239
- DE-A1-102011 076 809
- US-A- 1 488 547
- US-A- 3 880 025
- US-A- 5 765 270
- US-A1- 2003 150 302

## Beschreibung

Die Erfindung geht aus von einem in der älteren deutschen Patentanmeldung 10 2011 076 809.2 beschriebenen Verfahren zur Komplettbearbeitung von unbearbeiteten Zapfen und Planschultern geschmiedeter oder gegossener Rohlinge einer Kurbelwelle. Gemäß diesem älteren Vorschlag wurde die von den Rohlingen ausgehende Bearbeitung der Kurbelwelle durch eine neue Aufteilung der Vorgänge des Drehens, Grobschleifens und Feinschleifens auf die einzelnen Bereiche der Kurbelwelle verbessert. Im einzelnen wird dabei so vorgegangen, dass
a) zunächst die den zentrischen Lagerzapfen zugeordneten Planschultern durch Drehen bearbeitet werden,
b) anschließend die zentrischen Lagerzapfen ohne deren Planschultern und die Hublagerzapfen mit deren Planschultern grobgeschliffen werden und schließlich
c) danach die zentrischen Zapfen und die Hublagerzapfen auf das Endmaß fertiggeschliffen werden.

Dadurch ergibt sich unter anderem der Vorteil, dass ein nach dem Schritt b verbleibendes Aufmaß kleiner ist als ein für ein übliches Fertigschleifen von Zapfen und Planschultern erforderliches Aufmaß. Das anschließende Fertigschleifen erfolgt daher schneller und mit einem geringeren Verschleiß der Schleifscheiben als bei dem üblichen Vorgehen, wonach die Planschultern an den zentrischen Lagerzapfen in jeden Fall grobgeschliffen werden müssen.

Gemäß der älteren deutschen Patentanmeldung 10 2011 076 809.2 war schon erkannt worden, dass man bei der Bearbeitung der großen Planschultern an den zentrischen Lagerzapfen das bis dahin übliche Grobschleifen durch einen Drehvorgang ersetzen konnte. Hingegen war man der Meinung, dass es bei der Bearbeitung der die Hublagerzapfen seitlich umgebenden Planschultern, die sich an den Wangen der Kurbelwelle befinden, beim Grobschleifen bleiben müsse. Hierbei wurde ausdrücklich herausgestellt, wie schwierig es sein würde, eine Drehmaschine zu schaffen, mit der man einen sich bei der Rotation der Kurbelwelle exzentrisch bewegenden Bereich dieser Kurbelwelle wirtschaftlich und genau durch Drehen bearbeiten könne. Die Planschultern an den Hublagerzapfen sind zudem deutlich kleiner als die Planschultern an den zentrischen Lagerzapfen. Daher wurde die übliche Vorgehensweise beibehalten, die Planschultern der Hublagerzapfen durch die Breitseiten der Schleifscheiben grobzuschleifen, mit denen auch die Hublagerzapfen selbst und gfs. die Freistiche bearbeitet werden.

Inzwischen entstand jedoch der Wunsch, das in der älteren Anmeldung vorgeschlagene Verfahren und die zugehörige Fertigungslinie weiter zu verbessern. Der vorliegenden Erfindung liegt daher die Aufgabe zugrunde, ein Verfahren zur Drehbearbeitung und eine Drehmaschine zu schaffen, mit denen die die Hublagerzapfen umgebenden Planschultern an den Wangen einer Kurbelwelle durch Drehen wirtschaftlich und mit großer Genauigkeit bearbeitet werden. Diese Zielrichtung betrifft in erster Linie die Bearbeitung von unbearbeiteten Hublager-Planschultern an gegossenen oder geschmiedeten Kurbelwellen-Rohlingen, ist jedoch nicht darauf beschränkt.

Die Lösung dieser Aufgabe erfolgt durch die Gesamtheit der Merkmale des Anspruchs 1.

Das erfindungsgemäße Verfahren beruht auf einem klaren Prinzip und ist die Voraussetzung zu einer mechanisch einfach aufgebauten und zuverlässigen Drehmaschine. Die Kurbelwelle bleibt während der Drehbearbeitung an Ort und Stelle und führt lediglich eine Rotation um ihre zentrische, durch die zentrischen Lagerzapfen definierte Längsachse aus. Demgegenüber wird das Drehwerkzeug um drei linear und senkrecht zueinander verlaufende Bewegungsrichtungen, also in drei Bewegungsachsen bewegt. Hiervon verläuft die erste Bewegungsrichtung parallel zu der Längsachse der Kurbelwelle. Damit wird vor allem eine Lücke zwischen zwei benachbarten Wangen angesteuert, zwischen denen sich ein Hublagerzapfen befindet. Das Drehwerkzeug wird damit an mindestens eine ausgewählte Planschulter zugestellt, wobei auch die Schnitttiefe des Drehwerkzeugs eingestellt wird. Die zweite, zu der ersten senkrecht verlaufende Bewegungsrichtung dient dazu, die Hauptschneide des Drehwerkzeugs im Eingriff mit der Planschulter zu halten; das Drehwerkzeug muss der Planschulter daher ständig in waagerechter Richtung folgen. Die dritte, voraussetzungsgemäß lotrechte Bewegungsrichtung hält das Drehwerkzeug bei jeder Drehstellung der Kurbelwelle - und damit auch bei jeder der ständig wechselnden Positionen des Hublagerzapfens - auf derselben Höhe mit der geometrischen Achse des Hublagerzapfens. Während des Drehvorgangs muss somit das Drehwerkzeug ständig in der zweiten und der dritten Bewegungsrichtung bewegt werden, wobei die Bewegungen in diesen beiden Richtungen genau gesteuert und aufeinander abgestimmt sein müssen. Im Ergebnis wird mittels der dritten Bewegungsrichtung, die eine zyklische Auf- und Abwärtsbewegung ist, das Drehwerkzeug dem Hublagerzapfen ständig in der Höhe nachgeführt. Die Bewegung in der zweiten Bewegungsrichtung ist eine zyklische Hin- und Herbewegung und führt dazu, dass das Drehwerkzeug ständig im Eingriff mit der Planschulter bleibt, wobei die Hauptschneide auf der Höhe der geometrischen Achse des Hublagerzapfens liegt.

In Analogie zu dem bekannten Pendelhubschleifen lässt sich das vorstehend erläuterte Bearbeitungsverfahren gemäß der Erfindung auch als "Pendelhubdrehen" bezeichnen. Im Bewegungsablauf hat das erfindungsgemäße Verfahren den Vorteil, dass stets dieselbe Eingriffssituation vorliegt: das Drehwerkzeug liegt mit waagerecht verlaufender Hauptschneide stets gleichbleibend vor der Mittelebene des Hublagerzapfens. Beim Pendelhubschleifen dagegen muss die Schleifscheibe zwar nur in einer waagerechten Richtung linear hin und her bewegt werden, aber dafür ändert der Eingriffsbereich zwischen der Schleifscheibe und den Wangen am Hublagerzapfen dauernd seine Höhe; das bringt Schwierigkeiten bei der Zufuhr flüssiger Schleifmittel mit sich. Auch sonst hat das "Pendelhubdrehen" im Vergleich zum Pendelhubschleifen seine Vorteile, weil das Drehwerkzeug vergleichsweise einfach ist und die Kurbelwelle schneller gedreht werden kann als beim Schleifen. Ein weiterer großer Vorteil ergibt sich in den Werkzeugkosten, die hier beim Einsatz von Wendeschneidplatten geringer gehalten werden können.

Eine vorteilhafte Weiterbildung des erfindungsgemäßen Verfahrens besteht darin, dass mit einem Drehwerkzeug gearbeitet wird, das Hauptschneiden an seinen beiden Seiten hat. Beim Einführen in den Zwischenraum zwischen zwei benachbarten Wangen werden daher die beiden Planschultern eines Hublagerzapfens gleichzeitig bearbeitet. Die Wirtschaftlichkeit des erfindungsgemäßen Verfahrens wird dadurch weiter erhöht.

Ferner ist es vorteilhaft, wenn gemäß einer weiteren Ausgestaltung des Verfahrens ein Drehwerkzeug, das auch stirnseitig mit Hauptschneiden versehen ist, zum Drehen der Planschultern verwendet wird. Die stirnseitige Hauptschneide ist dann so ausgebildet, dass damit ein Freistich im Anschluss an die Drehbearbeitung der Planschultern erzeugt wird. Auch hierbei ist es möglich, zwei Freistiche zu beiden Seiten des Hublagerzapfens gleichzeitig herzustellen.

Das erfindungsgemäße Verfahren kann z. B. dadurch ausgeführt werden, dass der Antrieb für die gesteuerte zweite und dritte Bewegungsrichtung durch Stellmotoren über Kugelrollspindeln erfolgt. Es handelt sich um bewährte Einrichtungen, die präzise und zuverlässig arbeiten. Nach einer besonders vorteilhaften Ausgestaltung ist jedoch vorgesehen, dass die Antriebe für die zweite und die dritte Bewegungsrichtung durch je einen Kurbeltrieb ausgeübt werden. Es handelt sich hierbei um ein bewährtes Antriebselement, das ebenfalls spielfrei und zuverlässig arbeitet. Im Prinzip besteht jeder der Kurbeltriebe aus einer Exzenterscheibe, an der über einen Kurbelzapfen eine Schubstange angeordnet ist, die auf eines der linear zu bewegenden Bauteile, nämlich den Zwischenschlitten oder den Werkzeugschlitten, antreibend einwirkt. Im Vergleich zu den ebenfalls möglichen Antrieben durch Kugelrollspindeln hat der Kurbeltrieb hier den ganz spezifischen in seiner Kinematik begründeten Vorteil, dass in den Wendepunkten der linearen Bewegung eine Geschwindigkeitsanpassung erfolgt. Bei der Annäherung an den Wendepunkt wird die Geschwindigkeit der linearen Bewegung verringert und nach dem Durchlaufen des Wendepunktes wieder allmählich gesteigert. Es ergibt sich somit eine glatte, harmonisch ablaufende Linearbewegung für den Zwischenschlitten und den Werkzeugschlitten, ohne dass es dazu eines besonderen Steuerungsaufwandes bedarf. Die Rotationsgeschwindigkeit des Kurbeltriebes kann zudem noch in der Winkelgeschwindigkeit innerhalb einer Drehung angepasst werden.

Das erfindungsgemäße Verfahren kann mit Vorteil bei dem eingangs geschilderten Verfahren gemäß der älteren deutschen Patentanmeldung 10 2011 076 809.2 zum Einsatz kommen. Wenn die unbearbeitete Kurbelwelle mit ihrer zentrischen Längsachse zur Rotation eingespannt ist, können mittels des erfindungsgemäßen Verfahrens die Planschultern der Hublagerzapfen ebenso gut gedreht werden, wie sie bei den bisher bekannten Verfahren grob geschliffen worden sind. Dann wird das aus der älteren Anmeldung bekannte Verfahren in der Weise abgewandelt, dass nunmehr auch die den Hublagerzapfen zugeordneten Planschultern zu Beginn des Verfahrens vor oder nach den Planschultern gedreht werden, die den zentrischen Lagerzapfen zugeordnet sind. Die schon in der älteren Anmeldung geltend gemachten Vorteile werden dadurch noch vergrößert. Es wird nämlich der Verschleiß der Schleifscheiben verringert, die bisher beim Grobschleifen der Hublagerzapfens verwendet wurden und die mit ihren Breitseiten auch noch die Planschultern grob schleifen mussten. Weitere Vorteile kommen dadurch zustande, dass beim Fertigschleifen auf das Endmaß von einem kleineren Aufmaß als bisher ausgegangen werden kann.

Eine zur Durchführung des erfindungsgemäßen Verfahrens besonders geeignete Ausführung der Kurbelwellen-Drehmaschine ist in dem Anspruch 8 angegeben. Vorteilhafte weitere Ausgestaltungen dieser Kurbelwellen-Drehmaschine sind Gegenstand der Ansprüche 9 bis 15.

Da die erfindungsgemäße Drehmaschine in ihren Einzelteilen auf die in ihrer Längsrichtung eingespannte und in der Längsrichtung zur Drehung angetriebene Kurbelwelle ausgerichtet ist, lassen sich auch Mehrfach-Anordnungen verwirklichen, wie sie bei den Schleifmaschinen gewohnt sind und die Einrichtung von Fertigungslinien ermöglichen. Bspw. können an dem Werkzeugschlitten einer erfindungsgemäßen Kurbelwellen-Drehmaschine im Abstand voneinander zwei Drehwerkzeuge vorgesehen,werden; dabei können die Planschultern von zwei Hublagerzapfen, welche den gleichen Stellungswinkel an der Kurbelwelle haben, auch gleichzeitig bearbeitet werden. Besonders vorteilhaft ist eine Mehrfach-Anordnung gemäß Anspruch 15, bei der mindestens zwei Drehstöcke mit einer gemeinsamen Drehantriebs- und Spanneinrichtung zusammengebaut sind. Jeder Drehstock umfasst dabei einen Grundschlitten, einen Zwischenschlitten, einen ersten und einen zweiten Kurbeltrieb und einen Werkzeugträger. Die Drehstöcke bilden für sich steuerbare Antriebseinheiten für je ein Drehwerkzeug. Bei dieser Anordnung können Planschultern von Hublagern, die einen unterschiedlichen Stellungswinkel auf der Kurbelwelle haben, zeitgleich gearbeitet werden. Somit wird der Aufbau wirtschaftlicher Fertigungslinien in vielen Variationen möglich.

Die Erfindung wird anschließend anhand von Ausführungsbeispielen, die in den Figuren dargestellt sind, noch näher erläutert. Die Zeichnungen zeigen das Folgende:
- Fig. 1: ist ein Abschnitt einer Kurbelwelle, an der Dreharbeiten vorgenommen werden sollen.
- Fig. 2: zeigt eine Schnittdarstellung im Bereich der Einzelheit A aus Fig. 1.
- Fig. 3: zeigt einen Längsschnitt durch eine Kurbelwellen-Drehmaschine, mit der das Verfahren gemäß der Erfindung ausgeführt werden kann.
- Fig. 4: verdeutlicht verschiedene Bewegungsphasen beim Zusammenwirken des Drehwerkzeugs mit der Kurbelwelle.
- Fig. 5a: bis 5c zeigen verschiedene Möglichkeiten, unterschiedliche Einstellungen an der Kurbelwellen-Drehmaschine nach Fig. 3 vorzunehmen.
- Fig. 6a: ist die Darstellung eines Drehvorgangs in einer ersten Arbeitsphase und
- Fig. 6b: die entsprechende Darstellung in einer zweiten, weiter fortgeschrittenen Arbeitsphase.
- Fig. 7: veranschaulicht, wie das Schleifverfahren auch im Mehrfach-Eingriff durchgeführt werden kann.

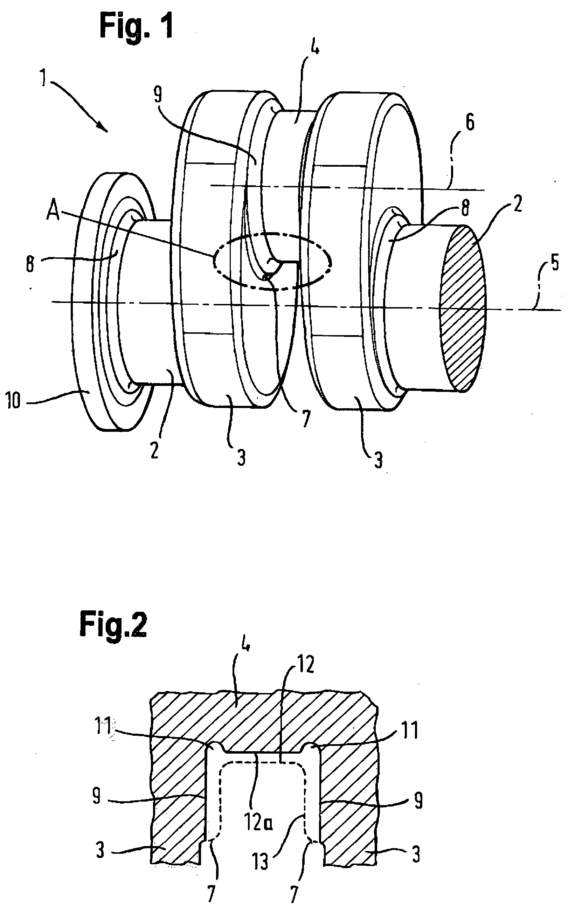

Fig. 1 zeigt einen Abschnitt einer Kurbelwelle 1. Es sind zwei zentrische Lagerzapfen 2 mit ihren zugeordneten Wangen 3 dargestellt, zwischen denen sich seitlich axial ein Hublagerzapfen 4 befindet. Die Lagerzapfen 2 haben die gemeinsame zentrische Längsachse 5, um die die Kurbelwelle 1 im Betrieb rotiert, und der Hublagerzapfen 4 hat die geometrische Achse 6. Neben dem linken Lagerzapfen 2 ist ein Flansch 10 vorgesehen, der über eine Planschulter 8 in den Lagerzapfen 2 übergeht. In ähnlicher Weise befinden sich zwischen dem Hublagerzapfen 4 und seinen benachbarten Wangen 3 die Planschultern 9. Diese bilden gewissermaßen einen Sockel auf den einander zugewandten restlichen Seitenflächen der Wangen. Deshalb ist in dem in Fig. 1 sichtbaren unteren Bereich dieser Seitenfläche eine kreisförmig verlaufende, abgerundete Stufe 7 der Planschulter 9 erkennbar, die im oberen Bereich der Wange 3 in deren Umfangskontur übergeht.

Fig. 2 verdeutlicht die Ausbildung der Planschulter 9 im Bereich des Hublagerzapfens 4 noch weiter. Dabei ist ein durch die geometrische Achse 6 des Hublagerzapfens 4 gelegter Teilschnitt gezeigt, der etwa im Bereich der Einzelheit A der Fig. 1 durch die Randkontur des Hublagerzapfens 4 mit seinen benachbarten Wangen 3 verläuft. Die in Fig. 2 schraffiert gezeichnete Fläche entspricht der Kontur nach der Drehbearbeitung. Sie geht von der ebenen Kontur der beiderseitigen Planschultern 9 über Freistiche 11 in eine zylindrische Umfangskontur 12 über, die nach dem Drehen noch durch Schleifen auf die endgültige Lauffläche 12a weiter bearbeitet wird. In einer gestrichelten Linie ist in Fig. 2 die Rohkontur 13 eingezeichnet, welche der Hublagerzapfen 4 und die Planschultern 9 vor dem Drehen aufweisen. Die Erfindung ist damit befasst, durch eine Drehbearbeitung von der Rohkontur 13 auf die gedrehte Kontur zu gelangen, die in Fig. 2 durch die gedrehten Planschultern 9 und in einer besonderen Ausgestaltung auch durch die Freistiche 11 begrenzt ist.

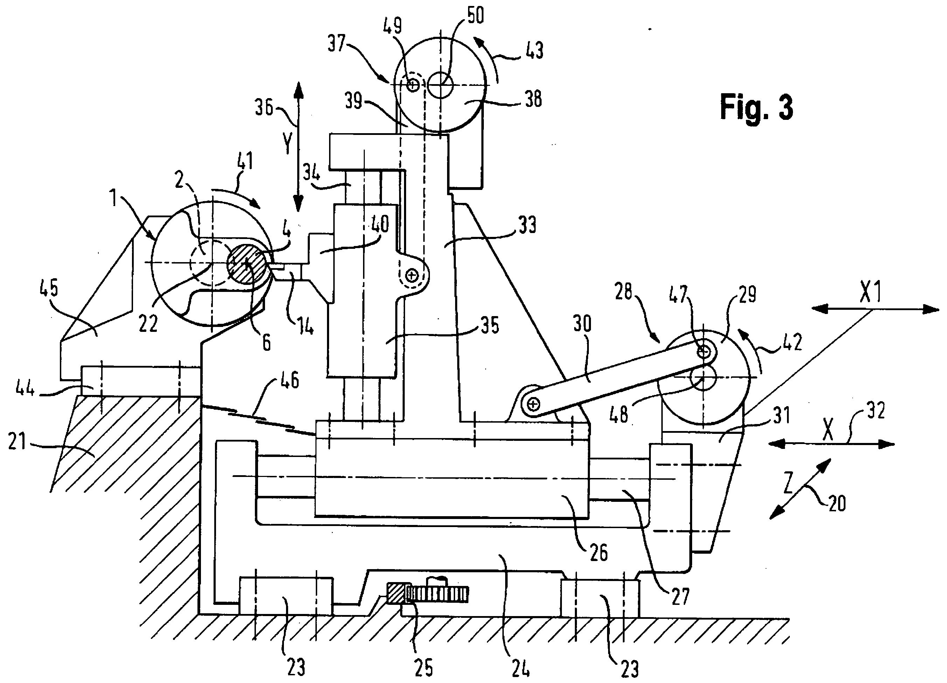

Eine hierzu geeignete Kurbelwellen-Drehmaschine ist in Fig. 3 in einem Längsschnitt dargestellt. Die geometrische Ausgangslinie zur Beschreibung der Maschine ist die Rotations- und Spannachse 22, die in Fig. 1 senkrecht zu der Zeichnungsebene verläuft. Diese Achse wird durch eine Drehantriebs- und Spanneinrichtung festgelegt, die in Fig. 1 nicht gezeigt ist und in der üblichen Weise aus einem Werkstück-Spindelstock und einem Reitstock bestehen kann. Die Rotations- und Spannachse 22 verläuft normalerweise waagerecht; sie ist bei eingespannter Kurbelwelle 1 mit deren zentrischer Längsachse 5 identisch. Das gleichfalls waagerecht ausgerichtete Maschinenbett 21 trägt auf waagerechten Laufschienen 23 einen Grundschlitten 24, der im Betrieb waagerecht und parallel zu der Rotations- und Spannachse 22 verschoben wird. Diese Richtung ist mit 20 bezeichnet; nach der in der Werkzeugmaschinentechnik üblichen Praxis ist das die Z-Achse. Sie verläuft demgemäß senkrecht zu der Zeichnungsebene der Fig. 1 und ist mit einem schrägen Pfeil in Erinnerung gebracht. Der Grundschlitten 24 kann z.B. durch einen Zahnstangen-Antrieb 25 hin und her bewegt werden.

An dem Grundschlitten 24 ist eine waagerecht und zu der Rotations- und Spannachse 22 senkrecht verlaufende Gleitführung 27 angebracht, auf der ein Zwischenschlitten 26 angetrieben und gesteuert gleitet. Seine Laufrichtung ist mit dem doppelten Richtungspfeil 32 bezeichnet, also der X-Richtung nach der Sprache der Praktiker. Der Zwischenschlitten 26 wird durch einen ersten Kurbeltrieb 28 angetrieben, der über ein Sockelteil 31 an dem Grundschlitten 24 gelagert ist. Der erste Kurbeltrieb 28 besteht aus einer motorisch angetriebenen Exzenterscheibe 29 und einer daran angelenkten Schubstange 30, die ihrerseits an dem Zwischenschlitten 26 angelenkt ist. Die Schubstange 30 ist über einen Kurbelzapfen 47 an der Exzenterscheibe 29 angelenkt. Indem der Kurbelzapfen 47 an der Exzenterscheibe 29 radial verstellbar angebracht ist kann der Arbeitshub des Zwischenschlittens 26 auf einfache Weise vergrößert oder verkleinert werden.

Der Zwischenschlitten 26 trägt weiter einen sich nach oben erstreckenden Standrahmen 33, auf dem über eine lotrechte Gleitführung 34 ein Werkzeugschlitten 35 angetrieben und gesteuert gleitet. Seine Laufrichtung ist mit dem doppelten Richtungspfeil 36 (entsprechend der Y-Achse) bezeichnet. Der Antrieb des Werkzeugschlittens 35 erfolgt durch einen zweiten Kurbeltrieb 37, der wieder aus einem Antriebsmotor, einer Exzenterscheibe 38 und einer an dieser über einen Kurbelzapfen 49 angelenkten Schubstange 39 besteht, die ihrerseits an dem Werkzeugschlitten 35 angelenkt ist. Durch radiales Verstellen des Kurbelzapfens 49 an der Exzenterscheibe 38 kann auch der Arbeitshub des Werkzeugschlittens 35 vergrößert oder verkleinert werden. An dem Werkzeugschlitten 35 ist das Drehwerkzeug 14 eingespannt, das in Fig. 1 schon auf den Hublagerzapfen 4 einer eingespannten Kurbelwelle 1 ausgerichtet ist.

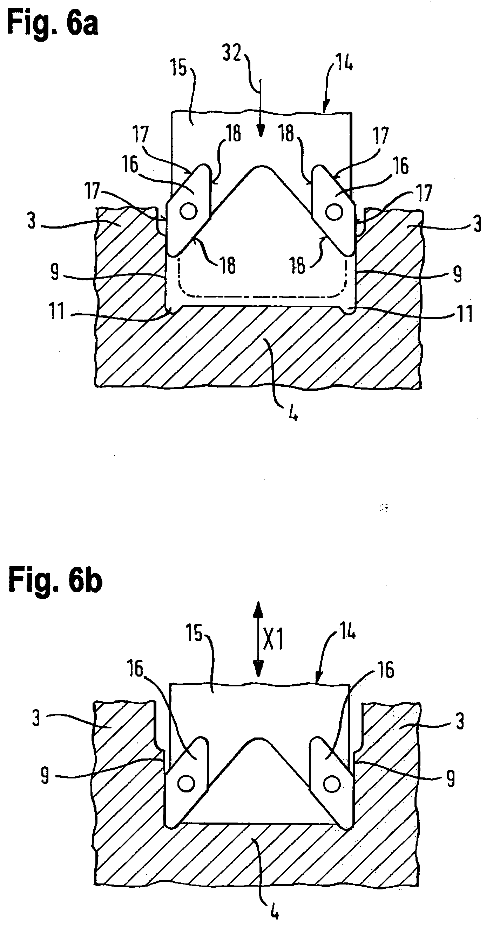

Das Maschinenbett 21 trägt seitlich, neben dem Grundschlitten 24, einen Werkstück-Tisch 44, der das Sockelteil 45 der schon erwähnten Drehantriebs- und Spanneinrichtung trägt. Bei dem beschriebenen Ausführungsbeispiel ist die Rotations- und Spannachse 22 betrieblich fest; d.h. im Drehbetrieb erfährt die eingespannte Kurbelwelle 1 nur eine Drehbewegung, jedoch keinerlei Linearbewegung. Das schließt aber nicht aus, dass bei einer Drehantriebs- und Spanneinrichtung, die aus einem Werkstückspindelstock und einem Reitstock besteht, diese Einheiten in Richtung der Rotations- und Spannachse 22 linear auf dem Sockelteil 45 verschoben werden können, wie das zum Einspannen der Kurbelwellen 1 und zur Anpassung an unterschiedliche Kurbelwellen-Längen erforderlich ist. Der gesamte in Fig.3 rechts von der Drehantriebs- und Spanneinrichtung liegende Teil der Drehmaschine ist eine in sich geschlossene vollständige Baueinheit, die allein der gesteuerten Bewegung des Drehwerkzeugs 14 dient. Diese Baueinheit lässt sich auch als Drehstock bezeichnen, und es können zum Beispiel mehrere Drehstöcke einer einzigen Drehantriebs- und Spanneinrichtung zugeordnet sein, vgl. hierzu Fig. 6. Gewissermaßen an der Grenze zwischen den beiden Baugruppen ist eine Abdeckung 46 vorgesehen, damit keine Drehspäne an die waagerechte Gleitführung 27 gelangen.

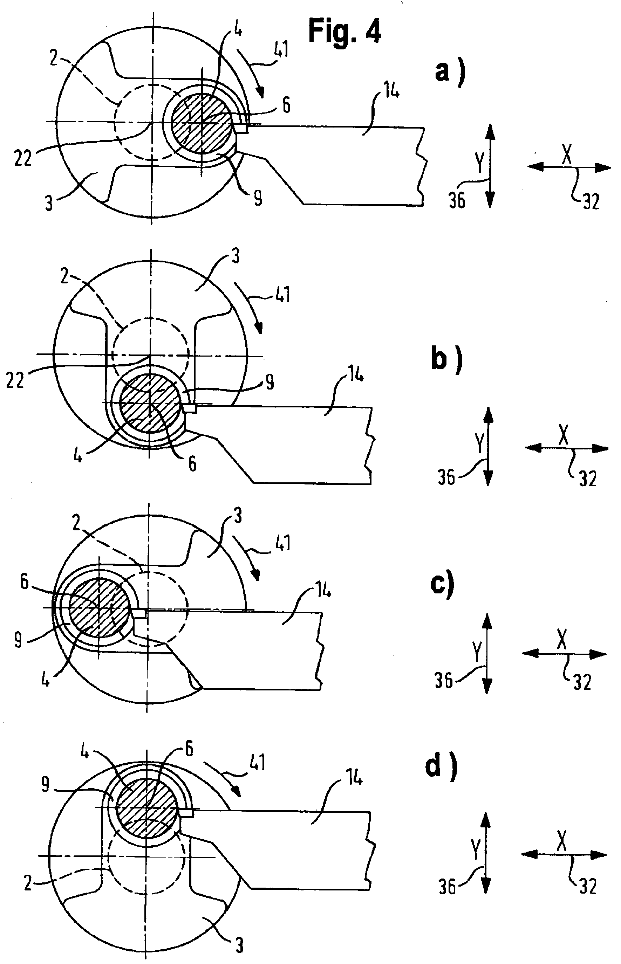

Die bisher beschriebene Kurbelwellen-Drehmaschine arbeitet wie folgt: Durch Verschieben des Grundschlittens 24 auf den Laufschienen 23 wird der Werkzeugträger 40 mit einem bestimmten Drehwerkzeug 14 vor die Lücke zwischen zwei Wangen 3 gefahren, an denen die Planschultern 9 abgedreht werden sollen. Die an ihren zentrischen Lagerzapfen 2 eingespannte Kurbelwelle 1 wird durch die Drehantriebs- und Spanneinrichtung in Drehung versetzt, wodurch die Kurbelwelle 1 zentrisch um die Rotations- und Spannachse 22 rotiert, vgl. den Richtungspfeil 41. Infolgedessen bewegt sich der Hublagerzapfen 4 auf einer Kreisbahn um die Rotations- und Spannachse 22. Sodann tritt der zweite Kurbeltrieb 37 in Aktion, wobei die Exzenterscheibe 38 um ihre Drehachse 50 rotiert (vgl. hierzu den Richtungspfeil 43) und den Werkzeugträger 40 mit dem Drehwerkzeug 14 in lotrechter Richtung 36 aufwärts und abwärts bewegt. Dabei muss die lineare Bewegung des Drehwerkzeugs 14 derart mit der Umlaufbewegung des Hublagerzapfens 4 abgestimmt werden, dass die Hauptschneide des Drehwerkzeugs 14 auf der Höhe der geometrischen Achse 6 des Hublagerzapfens 4 liegt. Das Drehwerkzeug 14 wird dem Hublagerzapfen 4 kontinuierlich vertikal nachgeführt. Dieser Vorgang ist in Fig. 4 am Beispiel von vier ausgesuchten Stellungen a bis d anschaulich dargestellt.

Das Schneidwerkzeug 14 soll mit seiner Hauptschneide aber seitlich in die Planschulter 9 einer oder beider Wangen 3 einschneiden. Deshalb ist gleichzeitig mit der lotrechten Bewegung (Richtungspfeil 36) auch eine waagerechte Bewegung (Richtungspfeil 32) erforderlich. Diese wird durch den ersten Kurbeltrieb 28 aufgebracht, der bei Drehung seiner Exzenterscheibe 29 um deren Drehachse 50 (vgl. die Drehrichtung 42) den Zwischenschlitten 26 und damit auch den Standrahmen 33 in der waagerechten Bewegungsrichtung 32 hin und her bewegt. Das Schneidwerkzeug 14 wird dem Hublagerzapfens 4 somit auch in waagerechter Richtung kontinuierlich nachgeführt. Dieser Vorgang wird ebenfalls durch Fig. 4 anschaulich verdeutlicht. Der waagerechten Nachführbewegung muss zusätzlich der Arbeitshub des Schneidwerkzeugs 14 überlagert werden, der sich über die radiale Erstreckung zumindest der Planschulter 9 und gegebenenfalls auch noch der Freistiche 11 erstreckt.

Alle beschriebenen Bewegungsvorgänge müssen gleichzeitig und kontinuierlich aufeinander abgestimmt verlaufen. Hierzu dient eine CNC-Steuerung, die alle maßgebliche Stellungsparameter berücksichtigt. Die beschriebene Ausführung mit dem ersten Kurbeltrieb 28 und dem zweiten Kurbeltrieb 37 hat den Vorzug, dass die lineare Verstellgeschwindigkeit des Zwischenschlittens 26 und des Werkzeugschlittens 35 bei der Annäherung an den Wendepunkt geringer wird und ebenso beim Entfernen von dem Wendepunkt wieder zunimmt. Das kommt der Anforderung nach einem glatten, mit angepasster Geschwindigkeit erfolgendem Betrieb ganz von allein entgegen.

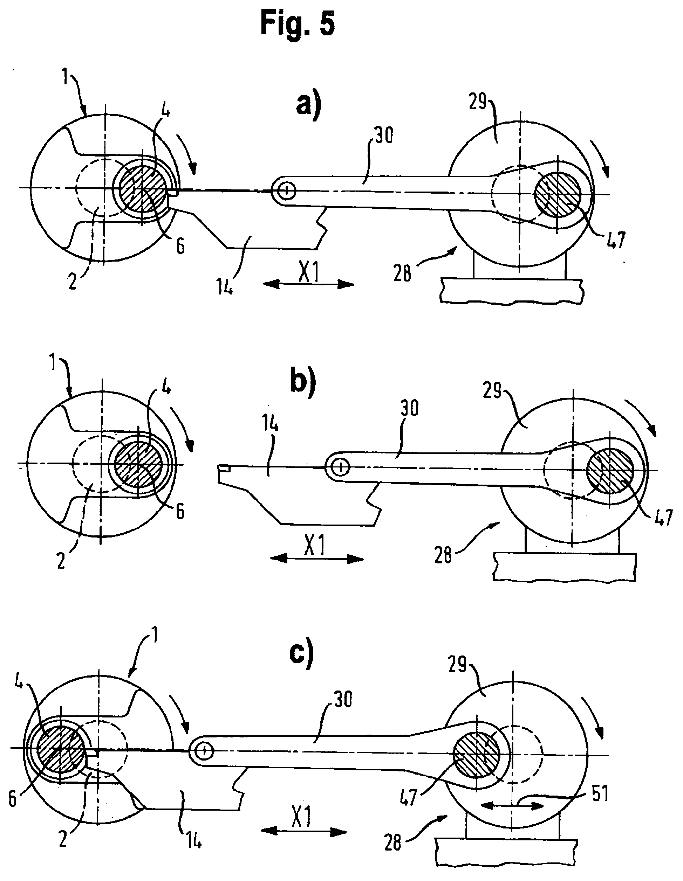

Die Figuren 5a bis 5b verdeutlichen in einer schematisierten Darstellung, welche Einstellmöglichkeiten zwischen einem Kurbeltrieb 28 und der Kurbelwelle 1 bestehen, wobei der erste Kurbeitrieb 28 gezeigt ist, der die zweite waagerechte Bewegungsrichtung 32 in der X1-Achse bewirkt. Die gleichen Einstellmöglichkeiten können auch für den zweiten Kurbeltrieb 37 bestehen, sind aber nicht zwingend erforderlich. Diese Bewegungen dienen dann dazu, den Drehstrahl in dessen Hub und auf "Mitte Pleuellager" einzustellen. Die Darstellung in den Figuren 5a bis 5b ist stark vereinfacht; so sind die zwischen der Schubstange 30 und dem Drehwerkzeug 14 befindlichen Übertragungsglieder fortgelassen, weil es nur auf den grundsätzlichen kinematischen Zusammenhang ankommt. Fig. 5a zeigt den Kurbeltrieb 28 in der linken äußeren Totpunktstellung seines Kurbelzapfens 47. Im Vergleich dazu ist bei derselben Totpunktstellung in Fig. 5b der gesamte erste Kurbeltrieb 28 in der waagerechten Richtung weiter von der Kurbelwelle 1 abgerückt. Das lässt sich erreichen, indem der gesamte erste Kurbeltrieb 28 in der waagerechten Richtung auf dem Sockelteil 31 verschoben wird, das dazu breiter ausgeführt werden muss, als es in der Fig. 3 dargestellt ist. Oder es kann die gesamte Antriebseinheit waagerecht verschoben werden.

Die geänderte Einstellung gemäß Fig. 5b bietet die Möglichkeit, das Drehwerkzeug 14 freizufahren, wenn die Drehantriebs- und Spanneinrichtung be- und entladen wird. Außerdem lässt sich durch die Verstellbarkeit gemäß den Figuren 5a und 5b erreichen, dass die wirksame radiale Erstreckung des Drehwerkzeugs 14 während des Plandrehens verändert werden kann; das Verstellen muss dann während des Plandrehens erfolgen. Dieselbe Wirkung lässt sich erreichen, indem die Schubstange 30 automatisch verlängert und verkürzt wird. Diese bauliche Variante ist jedoch sehr aufwändig, sodass man das waagerechte Verstellen des gesamten Kurbeltriebs 28 in der Regel vorziehen wird.

Fig. 5c zeigt die zu den Figuren 5a und 5b entgegengesetzte Totpunktstellung bei sonst gleicher Darstellung. Der Doppelpfeil 51 deutet die Möglichkeit an, den Kurbelzapfen 47 auf der Exzenterscheibe 29 radial zu verschieben. Dadurch kann eine unterschiedliche Hubhöhe des Hublagerzapfens 4 an den durch das Drehen zu bearbeitenden Kurbelwellen 1 berücksichtigt werden.

Als weitere Variante ist eine alternierende Betriebsweise möglich, bei der die Bewegungen der Exzenterscheiben 29 und 38 oszillierend erfolgen, indem sie abwechselnd vorwärts und rückwärts gedreht werden. Auf diese Weise lassen sie unterschiedliche Verfahrwege auch allein über die Steuerung einstellen, ohne dass mechanische Verstellungen ausgeführt werden müssen.

Die Schnitttiefe, mit der das Drehwerkzeug 14 seitlich in die Planschulter 9 des Hublagerzapfens 4 eindringt, lässt sich ebenfalls einstellen, indem der Grundschlitten 24 auf den waagerechten Laufschienen 23 verfahren wird. Zur Zeitersparnis wird man jedoch in vielen Fällen ein Drehwerkzeug 14 verwenden, das Hauptschneiden an seinen beiden Seiten hat. Das Drehwerkzeug 14 greift dabei wieder zwischen zwei benachbarte Planschultern 9 ein, wobei gemäß der dargestellten vorzugsweisen Ausführung die beiden benachbarten Planschultern 9 in einem einzigen Drehvorgang abgedreht werden.

Die Fig. 6a und 6b zeigen eine weitere Ausgestaltung, bei der das Drehwerkzeug 14 einen Schneidplattenträger 15 mit zwei Wendeschneidplatten 16 aufweist. Jede dieser beiden Wendeschneidplatten 16 hat zwei Paare von Hauptschneiden 17, 18, wobei gemäß der Darstellung der Fig. 6a und 6b die jeweils unteren Paare 17 und 18 aktiv sind. Beim Zustellen des Drehwerkzeugs 14 in der waagerechten Richtung 32 werden zunächst von den außen befindlichen Hauptschneiden 17 die Planschultern 9 des Hublagerzapfens 4 gedreht, vgl. hierzu Fig. 6a. Wenn der Vorgang bis zu einer größeren Eindringtiefe fortgesetzt wird, kommen auch die nach innen weisenden unteren Hauptschneiden 18 zur Wirkung, und es werden die Freistiche 11 in einem einzigen Vorgang zusammen mit dem Schleifen der ebenen Planschultern 9 durch den Drehvorgang hergestellt, vgl. Fig. 6b. Das ist ein nicht zu unterschätzender wirtschaftlicher Vorteil.

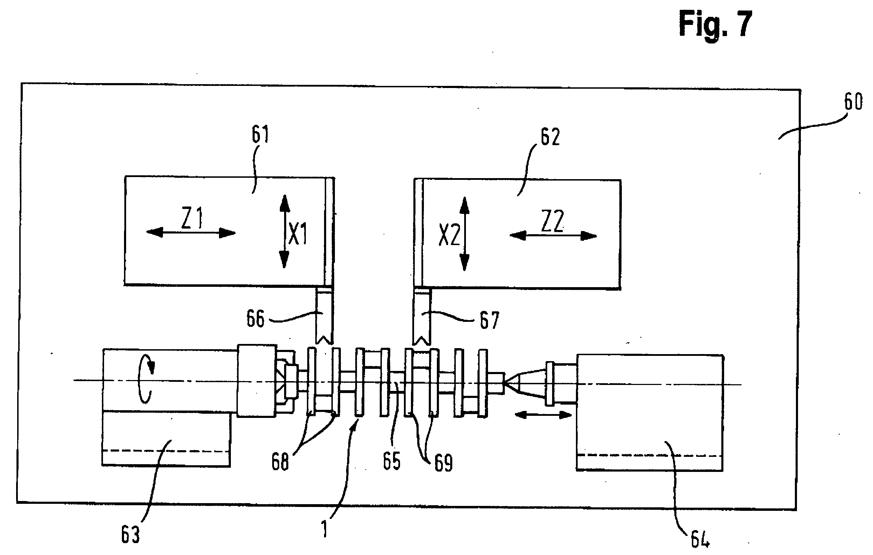

Die Wirtschaftlichkeit kann noch weiter gesteigert werden, indem beim Drehen ein Mehrfacheingriff von Drehwerkzeugen an mehreren Paaren von Planschultern 9 unterschiedlicher Hublagerzapfen 4 gleichzeitig erfolgt. Das wird anhand von Fig. 7 deutlich gemacht. Fig. 7 zeigt einen Blick von oben auf das Maschinenbett 60 einer im Prinzip dargestellten Drehmaschine. Die schon erwähnte Drehantriebs- und Spanneinrichtung besteht hier aus einem Werkstückspindelstock 63 und einem Reitstock 64, die zusammen eine Rotations- und Spannachse 65 festlegen. Neben der Drehantriebs- und Spanneinrichtung sind ein erster Drehstock 61 mit einem ersten Drehwerkzeug 66 sowie ein zweiter Drehstock 62 mit einem zweiten Drehwerkzeug 67 angeordnet. Die Drehantriebs- und Spanneinrichtung bleibt im Betrieb ortsfest auf dem Maschinenbett 60 befestigt; es wird lediglich die eingespannte Kurbelwelle 1 zur Rotation angetrieben.

Im Gegensatz dazu sind der erste Drehstock 61 und der zweite Drehstock 62 auf waagerechten Laufschienen beweglich angeordnet und so aufgebaut, wie das für einen einzelnen Drehstock schon anhand der Fig. 3 beschrieben worden ist. Im Falle der Fig. 7 ist jeder der beiden Drehstöcke 61, 62 für sich beweglich und greift im Betrieb in ein ausgewähltes Paar von Wangen 68, 69 ein, die jeweils einen anderen Hublagerzapfen zwischen sich einschließen. Die Winkellage der Hublager kann gleich oder phasenverschoben sein. Da zwei Drehstöcke 61, 62 vorhanden sind, von denen jeder für sich unabhängig gesteuert eingesetzt werden kann, lassen sich mit der Ausführung gemäß Fig. 7 die Planschultern von Hublagerzapfen drehen, die sich in einem gleichen oder unterschiedlichen Stellungswinkel auf der Kurbelwelle 1 befinden. Eine zeitgleiche Bearbeitung von jeweils zwei Planschultern von Hublagerzapfen, deren Stellungswinkel auf der Kurbelwelle 1 übereinstimmt, lässt sich mit einem einzigen Drehstock durchführen, der dann allerdings mindestens zwei Drehwerkzeuge 66, 67 an einem einzigen Werkzeugschlitten 35 aufweisen muss.

### Bezugsziffern

- 1: Kurbelwelle
- 2: zentrischer Lagerzapfen
- 3: Wangen
- 4: Hublagerzapfen
- 5: zentrische Längsachse
- 6: geometrische Achse des Hublagerzapfens
- 7: Stufe der Planschulter
- 8: Planschulter des zentrischen Zapfens
- 9: Planschulter des Hublagerzapfens
- 10: Flansch
- 11: Freistich
- 12: zylindrische Umfangskontur
- 12a: Lauffläche
- 13: Rohkontur
- 14: Drehwerkzeug
- 15: Schneidplattenträger
- 16: Wendeschneidplatte
- 17: erste Hauptschneide
- 18: zweite Hauptschneide
- 20: Richtungspfeil für die waagrechte Richtung (Z-Achse), parallel zu der Rotations- und Spannachse
- 21: Maschinenbett
- 22: Rotations- und Spannachse
- 23: Laufschienen
- 24: Grundschlitten
- 25: Zahnstangen-Antrieb
- 26: Zwischenschlitten
- 27: Gleitführung, waagerecht
- 28: erster Kurbeltrieb
- 29: Exzenterscheibe
- 30: Schubstange
- 31: Sockelteil
- 32: Richtungspfeil für waagerechte Richtung (X-Achse)
- 33: Standrahmen
- 34: Gleitführung, lotrecht
- 35: Werkzeugschlitten
- 36: Richtungspfeil für lotrechte Richtung (Y-Achse)
- 37: zweiter Kurbeltrieb
- 38: Exenterscheibe
- 39: Schubstange
- 40: Werkzeugträger
- 41: Drehrichtung der Kurbelwelle
- 42: Drehrichtung der Exenterscheibe des ersten Kurbelantriebs
- 43: Drehrichtung der Exenterscheibe des zweiten Kurbelantriebs
- 44: Werkstück-Tisch
- 45: Sockelteil der Drehantriebs- und Spanneinrichtung
- 46: Abdeckung
- 47: Kurbelzapfen
- 48: Drehachse
- 49: Kurbelzapfen
- 50: Drehachse
- 60: Maschinenbett
- 61: erster Drehstock
- 62: zweiter Drehstock
- 63: Werkstückspindelstock
- 64: Reitstock
- 65: Rotations- und Spannachse
- 66: erstes Drehwerkzeug
- 67: zweites Drehwerkzeug
- 68: Wange
- 69: Wange

## Patentansprüche

1. Verfahren zur Drehbearbeitung der die Hublagerzapfen umgebenden Planschultern an den Wangen einer Kurbelwelle, mit den folgenden Merkmalen:
a) die Kurbelwelle (1) ist um ihre durch die zentrischen Lagerzapfen (2) gehende waagerecht verlaufende Längsachse (5) zur Drehung angetrieben;
b) ein Drehwerkzeug (14) wird mit seiner Hauptschneide seitlich an mindestens eine Planschulter (9) angestellt und hat drei linear und senkrecht zueinander verlaufende Bewegungsrichtungen (20, 32, 36), von denen die erste Bewegungsrichtung (20) waagerecht parallel zu der Längsachse (5) der Kurbelwelle (1) verläuft;
c) die die drei Bewegungsrichtungen (20, 32, 36) bewirkenden Antriebe sind in Abstimmung mit der Drehbewegung der Kurbelwelle (1) derart gesteuert, dass das zwischen die Wangen (3) eingreifende Drehwerkzeug (14) sich bei jeder Drehstellung der Kurbelwelle (1) auf derselben Höhe mit der geometrischen Achse (6) des Hublagerzapfens (4) befindet.

2. Verfahren nach Anspruch 1, wobei durch Eingriff eines Drehwerkzeugs (14), das Hauptschneiden an seinen beiden Seiten hat, beide den Hublagerzapfen (4) umgebende Planschultern (9) gleichzeitig bearbeitet werden.

3. Verfahren nach Anspruch 1 oder 2, wobei durch ein Drehwerkzeug (14), das auch stirnseitig mit Hauptschneiden versehen ist, ein im Übergang der Planschultern (9) zu der Lauffläche (12) des Hublagerzapfens (4) vorgesehener Freistich (11) in einem Zuge im Anschluss an die Drehbearbeitung der Planschultern (9) erzeugt wird.

4. Verfahren nach einem der Ansprüche 1 bis 3, wobei die Antriebe für die zweite Bewegungsrichtung (32) und die dritte Bewegungsrichtung (36) durch je einen Kurbeltrieb (28, 37) ausgeübt werden.

5. Verwendung des Verfahrens nach einem der Ansprüche 1 bis 4 bei einem Verfahren zur Komplettbearbeitung zumindest von unbearbeiteten zentrischen Lagerzapfen (2) und Hublagerzapfen (4) und deren jeweiligen, die Zapfen (2, 4) umgebenden Planschultern (8, 9) geschmiedeter oder gegossener Rohlinge einer Kurbelwelle (1), bei welchem
a) zunächst die den zentrischen Lagerzapfen (2) zugeordneten Planschultern (8) und die den Hublagerzapfen (4) zugeordneten Planschultern (9) durch Drehen bearbeitet werden, wobei die Drehbearbeitung der den Hublagerzapfen (4) zugeordneten Planschultern (9) nach einem der Ansprüche 1 bis 4 erfolgt;
b) anschließend die zentrischen Lagerzapfen (2) ohne deren Planschultern (8) und die Hublagerzapfen (4) ohne deren Planschultern (9) grobgeschliffen werden, und
c) danach die zentrischen Lagerzapfen (2) und die Hublagerzapfen (4) von dem durch das Grobschleifen erreichten Aufmaß auf Endmaß fertiggeschliffen werden.

6. Verwendung nach Anspruch 5, **dadurch gekennzeichnet, dass** die den zentrischen Lagerzapfen (2) zugeordneten Planschultern (8) vor den den Hublagerzapfen (4) zugeordneten Planschultern (9) durch Drehen bearbeitet werden.

7. Verwendung nach Anspruch 5, **dadurch gekennzeichnet, dass** die den Hublagerzapfen (4) zugeordneten Planschultern (9) vor den den zentrischen Lagerzapfen (2) zugeordneten Planschultern (8) durch Drehen bearbeitet werden.

8. Kurbelwellen- Drehmaschine zur Drehbearbeitung der die Hublagerzapfen umgebenden Planschultern an den Wangen einer Kurbelwelle, zur Durchführung des Verfahrens nach einem der Ansprüche 1 bis 4, mit den folgenden Merkmalen:
a) auf einem Maschinenbett (21) ist durch eine Drehantriebs- und Spanneinrichtung eine waagerechte Rotations- und Spannachse (22) festgelegt, welche die Richtung bestimmt, in der die Längsachse (5) der zentrisch einzuspannenden und zu bearbeitenden Kurbelwelle (1) verläuft;
b) waagerecht und parallel zu der Rotations- und Spannachse (22) wird ein Grundschlitten (24) verfahren, der einen Zwischenschlitten (26) trägt;
c) der Zwischenschlitten (26) wird mittels eines an dem Grundschlitten (24) abgestützten ersten Kurbeltriebs (28) senkrecht zu der Rotations- und Spannachse (22) verfahren und damit in wechselnde Entfernung zu der Rotations- und Spannachse (22) gebracht;
d) der Zwischenschlitten (26) trägt seinerseits einen in lotrechter Richtung (36) beweglichen Werkzeugschlitten (35), der seinen Antrieb von einem an dem Zwischenschlitten (26) abgestützten zweiten Kurbeltrieb (37) erhält und ein Drehwerkzeug (14) trägt;
e) eine Steuervorrichtung steuert den ersten und den zweiten Kurbeltrieb (28, 37) nach Maßgabe der jeweiligen Drehstellung der Rotations- und Spannachse (22) in der Weise, dass das Drehwerkzeug (14) sich stets auf derselben Höhe mit der geometrischen Achse (6) des Hublagerzapfens (4) der eingespannten Kurbelwelle (1) befindet und in dieser Höhe mindestens eine Planschultern (9) durch Drehen bearbeitet.

9. Kurbelwellen-Drehmaschine nach Anspruch 8, **dadurch gekennzeichnet, dass** die Kurbelzapfen (47, 49) des ersten (28) und des zweiten Kurbeltriebs (37) radial verstellbar angeordnet sind.

10. Kurbelwellen-Drehmaschine nach Anspruch 8 oder 9, **dadurch gekennzeichnet, dass** die Schubstangen (301 39) des ersten (28) und des zweiten Kurbeltriebs (37) in ihrer Länge verstellbar ausgeführt sind.

11. Kurbelwellen-Drehmaschine nach Anspruch 9 oder 10, **dadurch gekennzeichnet, dass** das Verstellen selbsttätig durch die Maschinen-Steuervorrichtung erfolgt.

12. Kurbelwellen-Drehmaschine nach einem der Ansprüche 8 bis 11, **dadurch gekennzeichnet, dass** mindestens einer der Kurbeltriebe (28, 37) durchgehend in einer einzigen Richtung zur Drehung angetrieben ist.

13. Kurbelwellen-Drehmaschine nach einem der Ansprüche 8 bis 11, **dadurch gekennzeichnet, dass** mindestens einer der Kurbeltriebe (28, 37) alternierend zur Drehung angetrieben ist.

14. Kurbelwellen-Drehmaschine nach einem der Ansprüche 8 bis 13, **dadurch gekennzeichnet, dass** die Maschinen-Steuervorrichtung nach dem Prinzip der CNC-Steuerung erfolgt.

15. Kurbelwellen-Drehmaschine nach einem der Ansprüche 8 bis 14,
**dadurch gekennzeichnet,**
- **dass** der Grundschlitten (24), der Zwischenschlitten (26), der erste Kurbeltrieb (28), der Werkzeugschlitten (35) und der zweite Kurbeltrieb (37) baulich zu einem ersten Drehstock (61) zusammengefasst sind, der für sich angetrieben und gesteuert wird,
- **dass** ein zweiter, gleich aufgebauter Drehstock (62) neben dem ersten Drehstock (61) auf dem Maschinenbett (21) angeordnet ist und
- **dass** der erste Drehstock (61) und der zweite Drehstock (62) in der gleichen Weise baulich und funktional der gemeinsamen Drehantriebs- und Spanneinrichtung zugeordnet sind, aber unabhängig voneinander gesteuert werden, wobei
- das an dem ersten Drehstock (61) befindliche erste Drehwerkzeug (66) und das an dem zweiten Drehstock (62) befindliche zweite Drehwerkzeug (67) unterschiedlichen Längen-Abschnitten der waagerechten Rotations- und Spannachse (65) gegenüberstehen.

## Claims

1. Method for turning the flat shoulders surrounding the crankpins on the webs of a crankshaft, having the following features:
a)the crankshaft (1) is driven to rotate about its longitudinal axis (5), which extends horizontally and passes through the central bearing journals (2);
b)the major cutting edge of a turning tool (14) is set laterally against at least one flat shoulder (9) and has three linear and mutually perpendicular directions of motion (20, 32, 36), of which the first direction of motion (20) is horizontal and parallel to the longitudinal axis (5) of the crankshaft (1);
c)the drives that bring about the three directions of motion (20, 32, 36) are controlled in a manner coordinated with the rotary motion of the crankshaft (1) in such a way that the turning tool (14), which acts between the webs (3), is at the same level as the geometrical axis (6) of the crankpin (4) in any rotational position of the crankshaft (1).

2. Method according to Claim 1, wherein both flat shoulders (9) surrounding the crankpin (4) are machined simultaneously by the action of a turning tool (14) which has major cutting edges on both sides thereof.

3. Method according to Claim 1 or 2, wherein an undercut (11) provided at the transition from the flat shoulders (9) to the bearing surface (12) of the crankpin (4) is generated in a single pass after the turning of the flat shoulders (9) by a turning tool (14) which is also provided with major cutting edges on the end.

4. Method according to one of Claims 1 to 3, wherein the drives for the second direction of motion (32) and the third direction of motion (36) are provided by respective crank mechanisms (28, 37).

5. Use of the method according to one of Claims 1 to 4 in a method for the complete machining at least of unmachined central bearing journals (2) and crankpins (4) and their respective flat shoulders (8, 9) surrounding the journals/pins (2, 4) on forged or cast blanks for a crankshaft (1), in which method
a)the flat shoulders (8) associated with the central bearing journals (2) and the flat shoulders (9) associated with the crankpins (4) are first of all machined by turning, wherein the turning of the flat shoulders (9) associated with the crankpins (4) takes place in accordance with one of Claims 1 to 4;
b)the central bearing journals (2) without the flat shoulders (8) thereof and the crankpins (4) without the flat shoulders (9) thereof are then rough-ground, and
c)the central bearing journals (2) and the crankpins (4) are then finish-ground from the oversize achieved by the rough grinding process to the final size.

6. Use according to Claim 5, **characterized in that** the flat shoulders (8) associated with the central bearing journals (2) are machined by turning before the flat shoulders (9) associated with the crankpins (4).

7. Use according to Claim 5, **characterized in that** the flat shoulders (9) associated with the crankpins (4) are machined by turning before the flat shoulders (8) associated with the central bearing journals (2).

8. Crankshaft turning machine for turning the flat shoulders surrounding the crankpins on the webs of a crankshaft, for carrying out the method according to one of Claims 1 to 4, having the following features:
a) a horizontal rotation and clamping axis (22), which determines the direction of the longitudinal axis (5) of the crankshaft (1) to be clamped centrally and machined, is fixed on a machine bed (21) by a rotary driving and clamping device;
b)a main slide (24), which carries an intermediate slide (26), is moved horizontally and parallel to the rotation and clamping axis (22);
c)the intermediate slide (26) is moved perpendicularly to the rotation and clamping axis (22) by means of a first crank mechanism (28) supported on the main slide (24) and is thereby moved to an alternating distance from the rotation and clamping axis (22);
d)the intermediate slide (26), for its part, carries a tool slide (35) which can be moved in a vertical direction (36) and receives its drive from a second crank mechanism (37) supported on the intermediate slide (26) and carries a turning tool (14);
e)a control device controls the first and second crank mechanisms (28, 37) according to the respective rotational position of the rotation and clamping axis (22) in such a way that the turning tool (14) is always at the same level as the geometrical axis (6) of the crankpin (4) of the clamped crankshaft (1) and machines at least one flat shoulder (9) at this level by turning.

9. Crankshaft turning machine according to Claim 8, **characterized in that** the connecting rod journals (47, 49) of the first (28) and of the second crank mechanism (37) are arranged in a radially adjustable manner.

10. Crankshaft turning machine according to Claim 8 or 9, **characterized in that** the connecting rods (30, 39) of the first (28) and of the second crank mechanism (37) are of adjustable length.

11. Crankshaft turning machine according to Claim 9 or 10, **characterized in that** the adjustment is performed automatically by the machine control device.

12. Crankshaft turning machine according to one of Claims 8 to 11, **characterized in that** at least one of the crank mechanisms (28, 37) is driven to rotate in a single direction throughout.

13. Crankshaft turning machine according to one of Claims 8 to 11, **characterized in that** at least one of the crank mechanisms (28, 37) is driven to rotate alternately.

14. Crankshaft turning machine according to one of Claims 8 to 13, **characterized in that** the machine control device operates on the CNC principle.

15. Crankshaft turning machine according to one of Claims 8 to 14,
**characterized**
- **in that** the main slide (24), the intermediate slide (26), the first crank mechanism (28), the tool slide (35) and the second crank mechanism (37) are combined structurally to form a first turning unit (61), which is driven and controlled independently,
- **in that** a second turning unit (62) of identical construction is arranged on the machine bed (21) adjacent to the first turning unit (61), and
- **in that** the first turning unit (61) and the second turning unit (62) are associated in the same way structurally and functionally with the common rotary driving and clamping device but are controlled independently of one another, wherein
- the first turning tool (66), which is situated on the first turning unit (61), and the second turning tool (67), which is situated on the second turning unit (62), lie opposite different length segments of the horizontal rotation and clamping axis (65).

## Revendications

1. Procédé pour le tournage des épaulements plans entourant les manetons sur les joues d'un vilebrequin, avec les caractéristiques suivantes:
a) le vilebrequin (1) est entraîné en rotation autour de son axe longitudinal (5) orienté horizontalement qui passe à travers les tourillons centraux (2);
b) un outil de tournage (14) est approché d'au moins un épaulement plan (9) avec son arête de coupe principale et il possède trois directions de mouvement (20, 32, 36) s'étendant linéairement et perpendiculairement l'une à l'autre, dont la première direction de mouvement (20) est orientée horizontalement parallèlement à l'axe longitudinal (5) du vilebrequin (1);
c) les entraînements assurant les trois directions de mouvement (20, 32, 36) sont commandés en accord avec le mouvement de rotation du vilebrequin (1), de telle manière que l'outil de tournage (14) opérant entre les joues (3) se trouve, dans chaque position de rotation du vilebrequin (1), à la même hauteur que l'axe géométrique (6) du maneton (4).

2. Procédé selon la revendication 1, dans lequel, par l'opération d'un outil de tournage (14) qui comporte des arêtes de coupe principales sur ses deux côtés, on usine simultanément les deux épaulements plans (9) entourant le maneton (4).

3. Procédé selon la revendication 1 ou 2, dans lequel, au moyen d'un outil de tournage (14) qui est également doté d'arêtes de coupe principales sur le côté frontal, on produit une gorge de dégagement (11) prévue dans la transition entre les épaulements plans (9) et la portée (12) du maneton (4) en une opération à la suite du tournage des épaulements plans (9).

4. Procédé selon l'une quelconque des revendications 1 à 3, dans lequel les entraînements pour la deuxième direction de mouvement (32) et la troisième direction de mouvement (36) sont actionnés chacun par une commande à manivelle (28, 37).

5. Utilisation du procédé selon l'une quelconque des revendications 1 à 4 dans un procédé pour l'usinage complet au moins de tourillons centraux (2) et de manetons (4) non usinés et de leurs épaulements plans respectif (8, 9) entourant les tourillons (2, 4) d'ébauches forgées ou coulées d'un vilebrequin (1), dans laquelle:
a) on usine d'abord par tournage les épaulements plans (8) associés aux tourillons centraux (2) et les épaulements plans (9) associés aux manetons (4), le tournage des épaulements plans (9) associés aux manetons (4) étant effectué selon l'une quelconque des revendications 1 à 4;
b) puis on rectifie grossièrement les tourillons centraux (2) sans leurs épaulements plans (8) et les manetons (4) sans leurs épaulements plans (9), et
c) on effectue ensuite la rectification finale des tourillons centraux (2) et des manetons (4) de la cote obtenue par la rectification grossière à la cote finale.

6. Utilisation selon la revendication 5, **caractérisée en ce que** l'on usine par tournage les épaulements plans (8) associés aux tourillons centraux (2) avant les épaulements plans (9) associés aux manetons (4).

7. Utilisation selon la revendication 5, **caractérisée en ce que** l'on usine par tournage les épaulements plans (9) associés aux manetons (4) avant les épaulements plans (8) associés aux tourillons centraux (2).

8. Machine de tournage de vilebrequins pour l'usinage par tournage des épaulements plans entourant les manetons sur les joues d'un vilebrequin, pour la mise en oeuvre du procédé selon l'une quelconque des revendications 1 à 4, avec les caractéristiques suivantes:
a) sur une fondation de machine (21), un axe de rotation et de serrage horizontal (22) est fixé par un dispositif d'entraînement rotatif et de serrage, axe qui définit la direction dans laquelle s'étend l'axe longitudinal (5) du vilebrequin (1) à serrer et à usiner en position centrée;
b) un chariot principal (24), qui porte un chariot intermédiaire (26), est déplacé horizontalement et parallèlement à l'axe de rotation et de serrage (22);
c) le chariot intermédiaire (26) est déplacé au moyen d'une commande à manivelle (28) montée sur le chariot principal (24), perpendiculairement à l'axe de rotation et de serrage (22) et est ainsi amené à une distance variable de l'axe de rotation et de serrage (22);
d) le chariot intermédiaire (26) porte à son tour un chariot porte-outil (35) mobile en direction verticale (36), qui reçoit son entraînement d'une deuxième commande à manivelle (37) montée sur le chariot intermédiaire (26) et qui porte un outil de tournage (14);
e) un dispositif de commande commande la première et la deuxième commandes à manivelle (28, 37) en fonction de la position de rotation respective de l'axe de rotation et de serrage (22), de telle manière que l'outil de tournage (14) se trouve toujours à la même hauteur que l'axe géométrique (6) du maneton (4) du vilebrequin serré (1) et usine par tournage à cette hauteur au moins un épaulement plan (9).

9. Machine de tournage de vilebrequins selon la revendication 8, **caractérisée en ce que** les tourillons (47, 49) de la première (28) et de la deuxième (37) commande à manivelle sont réglables radialement.

10. Machine de tournage de vilebrequins selon la revendication 8 ou 9, **caractérisée en ce que** les bielles (30, 39) de la première (28) et de la deuxième (37) commande à manivelle sont réglables en longueur.

11. Machine de tournage de vilebrequins selon la revendication 9 ou 10, **caractérisée en ce que** le réglage est effectué automatiquement par le dispositif de commande de la machine.

12. Machine de tournage de vilebrequins selon l'une quelconque des revendications 8 à 11, **caractérisée en ce qu'**au moins une des commandes à manivelle (28, 37) est entraînée en continu en rotation dans une seule direction.

13. Machine de tournage de vilebrequins selon l'une quelconque des revendications 8 à 11, **caractérisée en ce qu'**au moins une des commandes à manivelle (28, 37) est entraînée en rotation en alternance.

14. Machine de tournage de vilebrequins selon l'une quelconque des revendications 8 à 13, **caractérisée en ce que** le dispositif de commande de la machine opère selon le principe de la commande CNC.

15. Machine de tournage de vilebrequins selon l'une quelconque des revendications 8 à 14, **caractérisée en ce que**
- le chariot principal (24), le chariot intermédiaire (26), la première commande à manivelle (28), le chariot porte-outil (35) et la deuxième commande à manivelle (37) sont rassemblés structurellement en un premier étage rotatif (61), qui est entraîné et commandé de façon indépendante,
- un deuxième étage rotatif (62), de structure identique, est disposé à côté du premier étage rotatif (61) sur la fondation de machine (21), et
- le premier étage rotatif (61) et le deuxième étage rotatif (62) sont associés de la même manière, structurellement et fonctionnellement, au dispositif commun d'entraînement rotatif et de serrage, mais sont commandés indépendamment l'un de l'autre,
- dans laquelle le premier outil de tournage (66) se trouvant sur le premier étage rotatif (61) et le deuxième outil de tournage (67) se trouvant sur le deuxième étage rotatif (62) sont situés en face de différentes parties de la longueur de l'axe horizontal de rotation et de serrage (65).
